# FASCICULE DE BREVET EUROPEEN

(11) **EP 2 600 108 B1**
(45) Date de publication et mention de la délivrance du brevet: **03.07.2019**
(21) Numéro de dépôt: 12194262.7
(22) Date de dépôt: 26.11.2012
(51) Int. Cl.: G01C 23/00, G06F 3/0484

(54) **Dispositif de dialogue interactif entre un opérateur d'un aéronef et un système de guidage dudit aéronef**
Vorrichtung für den interaktiven Dialog zwischen einem Luftfahrzeugführer und einem Führungssystem dieses Luftfahrzeugs
Device for interactive dialogue between an aircraft operator and a system for guiding said aircraft

(30) Priorité: 29.11.2011 FR 1160884
(43) Date de publication de la demande: 05.06.2013
(73) Titulaire: Airbus Opérations SAS, 31060 Toulouse (FR)
(72) Inventeur: Louise-Babando, Pascale, 31100 Toulouse (FR); Bourret, Thierry, 31200 Toulouse (FR); Ollagnon, Claire, 34070 Montpellier (FR); Chauveau, Nicolas, 34000 Montpellier (FR)
(74) Mandataire: Gevers & Orès

(56) Documents cités:
- EP-A1- 0 516 501
- EP-A1- 0 562 929
- EP-A1- 0 615 183
- EP-A1- 2 063 227
- US-A1- 2005 203 675
- US-A1- 2007 182 590

## Description

La présente invention concerne un dispositif de dialogue pour un aéronef, notamment un avion de transport, permettant un dialogue entre un opérateur de l'aéronef, en particulier un pilote, et un système de guidage dudit aéronef.

Les avions dotés d'un système de guidage, à savoir soit d'un directeur de vol qui calcule des consignes de pilotage en fonction de consignes de guidage soit d'un système de pilotage automatique qui permet de suivre des consignes de guidage de façon automatique, sont pourvus d'un équipement, appelé FCU (« Flight Control Unit » en anglais) sur les avions de type AIRBUS et MCP (« Mode Control Panel » en anglais) sur les avions de type BOEING, qui permet à un pilote de l'avion d'entrer des consignes de guidage dans le système de guidage.

De façon générale, le pilote choisit une consigne de guidage, puis il commande l'engagement (activation) du mode de guidage associé, pour qu'il prenne en compte soit la valeur entrée (dans un mode dit « sélecté »), soit une valeur calculée par le système selon divers critères (dans un mode dit « managé »).

Plus particulièrement, le pilote peut notamment :
- sur l'axe de vitesse :
   - entrer une consigne de vitesse (CAS) ou de Mach ;
   - donner la main au système de façon à utiliser une consigne de vitesse ou de Mach calculée en fonction de certains critères ;
- sur l'axe latéral :
   - entrer une consigne de cap (HEADING) ou de route (TRACK) ;
   - donner la main au système de façon à utiliser la route du plan de vol prédéfini ; et
- sur l'axe vertical :
   - entrer une consigne d'altitude ;
   - indiquer la manière de rejoindre cette consigne d'altitude :
      - en respectant une vitesse verticale ou une pente ; ou
      - en optimisant le temps de montée ou de descente tout en respectant une vitesse air ; ou bien
      - en respectant un profil vertical géométrique défini par le système selon certains critères ;
   - prévoir un palier ; et
   - suivre un axe (d'approche par exemple).

Ces consignes sont prises en compte par le système de guidage, soit directement dès que leur valeur est modifiée si le mode associé est actif, soit après validation (engagement du mode associé) dans le cas où un autre mode de guidage est initialement engagé. Dans ce dernier cas, la consigne est dite préréglée (« preset » en anglais) avant sa validation.

A chaque sélection de consigne à atteindre ou à maintenir correspond un mode de guidage de l'avion. Il existe un mode engagé par axe (vitesse, latéral, vertical) de façon exclusive. A titre d'illustration, on peut citer les modes suivants :
- sur l'axe latéral :
   - mode de capture ou de maintien d'un cap ;
   - mode de capture ou de maintien d'une route ;
   - mode de rejointe ou de maintien de la trajectoire du plan de vol ;
   - mode de capture ou de maintien d'un axe d'approche sur un plan horizontal ;
- sur l'axe vertical :
   - mode de capture ou de maintien d'altitude ;
   - mode de rejointe d'altitude (montée ou descente) en respectant une vitesse air ;
   - mode de montée ou de descente en respectant une vitesse verticale ou une pente ;
   - mode de montée ou de descente en respectant un profil géométrique ou des contraintes d'altitude ; et
   - mode de capture ou de maintien de l'axe d'approche sur un plan vertical.

Un résumé synthétique du comportement du système de guidage (directeur de vol ou système de pilotage automatique, associé ou non à une commande automatique de la poussée) est réalisé, en général, sur les écrans affichant les paramètres primaires du vol, de type PFD (pour « Primary Flight Display » en anglais), au niveau d'un tableau de type FMA (pour « Flight Mode Annunciator » en anglais). Ce résumé synthétique rappelle, généralement, les modes de guidage engagés (actifs) sur chaque axe (vitesse, latéral, vertical), ainsi que les modes de guidage armés, c'est-à-dire ceux qui ont été demandés par le pilote et qui s'engageront de façon automatique lorsque des conditions d'engagement du mode seront remplies. A titre d'exemple, en dehors de la trajectoire du plan de vol, en mode de maintien de cap convergeant vers la trajectoire du plan de vol avec le mode rejointe et de maintien de la trajectoire du plan de vol armé, ce dernier mode s'engage de façon automatique à l'approche du plan de vol.

Sur la plupart des avions à deux pilotes, le boîtier de commande du système de guidage est situé au centre du poste de pilotage (au-dessus des écrans présentant les paramètres de vol) afin que les deux pilotes puissent y accéder.

Ce boîtier de commande, par exemple de type FCU, permet :
- de sélectionner des consignes de guidage ;
- d'engager les modes associés à une consigne de guidage (rendre le mode actif), ou de demander l'armement du mode ; et
- de changer de référence (par exemple cap plutôt que route) pour une consigne de guidage.

Le pilote en charge du guidage de l'avion a pour tâche de sélectionner les consignes et les modes de guidage. Actuellement, il réalise cette tâche par le biais du boîtier de commande dédié (FCU ou MCP) qui se trouve entre les deux pilotes, puis il doit vérifier la sélection de ses consignes (valeurs) au niveau de l'écran primaire de vol qui se trouve face à lui (PFD pour « Primary Flight Display ») et/ou des écrans de navigation (ND pour « Navigation Display » dans le plan latéral ; VD pour « Vertical Display » dans le plan vertical). Ensuite, la surveillance du guidage est réalisée sur ces écrans qui indiquent le comportement du guidage :
- résumé du comportement via la synthèse des modes armés et engagés : tableau FMA ;
- consignes de guidage (vitesse CAS, cap/route, altitude, vitesse verticale/pente) et écarts par rapport aux paramètres courants de l'avion : écran PFD ;
- marges par rapport aux limites (par exemple, marge par rapport à la vitesse minimale opérationnelle et vitesse de décrochage) : écran PFD.

Cette solution usuelle présente des inconvénients, et notamment :
- le pilote doit sélectionner les consignes et modes de guidage à un endroit (boîtier de commande FCU), puis vérifier et surveiller le comportement de l'avion à un autre endroit (sur les écrans de restitution). Ceci impose des allers-retours visuels et une dispersion des éléments de guidage entre la commande et la restitution du comportement du système ;
- le boîtier de commande est un équipement physique coûteux et difficilement modifiable (car de type matériel) ; et
- ce boîtier de commande est encombrant au niveau du poste de pilotage.

Les documents EP 0 562 929, US 2007/0182590, EP 0 615 183 et US 2005/0203675 décrivent des dispositif de dialogue entre un opérateur d'un aéronef et un système de guidage.

La présente invention concerne un dispositif de dialogue entre un opérateur, notamment un pilote, d'un aéronef et un système de guidage dudit aéronef, qui permet de remédier aux inconvénients précités. Elle concerne plus précisément un dispositif de dialogue entre un opérateur d'un aéronef et un système de guidage dudit aéronef, selon la revendication 1 ainsi qu'un système de guidage d'un aéronef, selon la revendication 13.

A cet effet, ledit dispositif de dialogue qui est embarqué sur l'aéronef et qui comporte au moins un écran susceptible de restituer des informations de guidage, est remarquable en ce que ledit écran comprend au moins un objet graphique qui est réalisé sous forme d'un moyen d'interaction qui est associé à au moins une consigne de guidage dudit système de guidage et qui représente :
- d'une part, un élément de restitution qui indique la valeur de la consigne de guidage associée dudit système de guidage ; et
- d'autre part, un élément de commande qui peut être saisi et déplacé le long d'une courbe par un opérateur de manière à modifier la valeur de ladite consigne de guidage.

Ainsi, grâce à l'invention, on dispose sur l'écran, par exemple de type PFD, ND ou VD, d'au moins un moyen d'interaction qui est associé à une consigne de guidage dudit système de guidage et qui, non seulement, permet la restitution de la valeur de cette consigne de guidage à laquelle il est associé, mais qui permet également à un opérateur de modifier cette valeur sur l'écran. La commande et la surveillance sont regroupées, co-localisées.

La présente invention peut être appliquée à toute consigne de guidage utilisée par un système de guidage et notamment aux consignes de guidage suivantes : vitesse/mach, cap/route, altitude, vitesse verticale/ pente.

On obtient ainsi une fonction d'interaction (directe) sur un écran (qui était jusque-là dédié uniquement à la restitution des paramètres de vol et du guidage), au travers d'un moyen d'interaction (à savoir un objet graphique permettant une interaction) associé à une consigne de guidage.

Ce moyen d'interaction peut être saisi et déplacé par un opérateur le long d'une courbe (sur une échelle par exemple, qui peut apparaître de façon dynamique et contextuelle lors de la modification de consigne) de manière à modifier la consigne de guidage associée. A titre d'exemple, l'invention peut permettre de saisir un moyen d'interaction indiquant une consigne de cap, le déplacer le long d'une échelle de cap (une rose de cap par exemple) pour modifier la consigne de cap de sorte que la nouvelle consigne de cap soit prise en compte par le système de guidage de l'aéronef.

Ladite courbe qui est prédéfinie peut être une échelle de valeurs affichée par défaut ou une courbe indépendante sur laquelle peut apparaître de façon dynamique et contextuelle une échelle de valeurs.

Le dispositif de dialogue conforme à l'invention, de type interactif, permet ainsi :
- au pilote de sélectionner des consignes de guidage (ainsi que des modes de guidage, comme précisé ci-dessous) à l'endroit même (écran) où il peut vérifier et surveiller le comportement de l'aéronef. Ceci évite les allers-retours visuels et une dispersion des éléments de guidage, qui existent sur les dispositifs de dialogue usuels ; et
- dans des circonstances précisées ci-dessous, de se passer d'un boîtier de commande, par exemple de type FCU, qui est un équipement coûteux, difficilement modifiable et encombrant.

Dans un mode de réalisation préféré, ledit moyen d'interaction comprend une pluralité d'états qui permettent la mise en oeuvre d'actions différentes. Dans ce cas, avantageusement, ledit moyen d'interaction comprend des états qui permettent la mise en oeuvre d'au moins certaines des actions différentes suivantes :
- modifier une consigne de guidage, dite sélectée, qui est directement appliquée par le système de guidage ;
- modifier une consigne de guidage préréglée, qui sera appliquée par le système de guidage après validation ;
- engager un mode de capture ou de maintien d'une consigne de guidage sélectée ; et
- engager un mode de capture ou de maintien d'une consigne de guidage calculée (dite « managée »).

En outre, de façon avantageuse, le passage d'un état à un autre du moyen d'interaction est généré par un déplacement correspondant de ce dernier.

Par ailleurs, dans un mode de réalisation préféré, ledit dispositif de dialogue comporte une pluralité de moyens d'interaction, dont chacun est destiné à une consigne de guidage donnée (vitesse/mach, cap/route, altitude, vitesse verticale/pente) dudit système de guidage. L'utilisation d'une pluralité de moyens d'interaction, à savoir un moyen d'interaction par consigne de guidage, sur les écrans dédiés à la restitution des paramètres de vol et du guidage (PFD, ND, VD), permet de mettre en oeuvre directement sur ces écrans toutes les fonctions d'un boîtier de commande physique usuel, par exemple de type FCU, et donc de se passer d'un tel boîtier de commande, ce qui représente un gain important notamment en termes de coût, de poids et d'encombrement.

Dans un mode de réalisation particulier, ledit dispositif de dialogue comporte au moins un moyen d'interaction, qui est susceptible de commander au moins deux références différentes (vitesse/mach, cap/route, vitesse verticale/pente) d'une consigne de guidage dudit système de guidage. Ce moyen d'interaction est susceptible de commander uniquement une référence à la fois, et la sélection d'une desdites références à commander dépend du déplacement dudit moyen d'interaction (ou de l'action réalisée pour le faire apparaître).

Par ailleurs, de façon avantageuse, ledit moyen d'interaction n'est pas affiché en continu sur l'écran, et il apparaît en plaçant un pointeur (doigt ou curseur notamment) sur l'objet graphique correspondant.

Dans le cadre de la présente invention, ledit moyen d'interaction peut être déplacé par une action directe. Il est toutefois également envisageable de déplacer ledit moyen d'interaction par un effet dit « de bras de levier » précisé ci-dessous.

Dans un mode de réalisation préféré, ledit écran engendre un retour visuel dynamique sur une trajectoire prédite associée à la consigne de guidage, ce qui permet de disposer directement sur le même écran à la fois d'un moyen de sélection de la consigne de guidage, de la restitution de sa valeur, et d'une indication de l'effet généré sur la trajectoire de l'aéronef. Ce mode de réalisation est particulièrement avantageux opérationnellement, puisque le pilote peut interpréter de façon immédiate l'impact de ses modifications de consigne de guidage sur la trajectoire, et ceci sans avoir à réaliser un aller-retour visuel entre un panneau de commande et un écran de restitution.

De plus, dans ce cas, avantageusement :
- ledit écran peut afficher automatiquement au moins un point caractéristique de ladite trajectoire prédite ; et
- ledit moyen d'interaction est susceptible d'agir sur le ou les points caractéristiques, ainsi affichés, de ladite trajectoire prédite pour les modifier.

La présente invention est appliquée à un ou plusieurs écrans, et de préférence, aux écrans PFD, ND et VD précités. Selon l'invention, ledit écran est un écran tactile, et un objet graphique est commandé par un contact direct, de préférence digital, de l'opérateur sur cet écran tactile.

En outre, dans un autre exemple d'un mode de réalisation, le dispositif de dialogue comporte, en plus de l'écran, des moyens de commande, tels qu'une boule de commande ou un pavé tactile notamment (du type multitouches ou non), qui sont reliés à l'écran et qui permettent à un opérateur de commander le déplacement d'un curseur sur l'écran, destiné à agir sur le ou les moyens d'interaction prévus.

La présente invention concerne également un système de guidage d'un aéronef, à savoir un directeur de vol ou un système de pilotage automatique, qui comporte un dispositif de dialogue tel que celui précité, pour permettre un dialogue entre ledit système de guidage et un opérateur, notamment un pilote, dudit aéronef.

Dans un exemple, on peut prévoir en outre un aéronef, en particulier un avion de transport, qui est équipé :
- d'un tel dispositif de dialogue ; et/ou
- d'un tel système de guidage.

Les figures du dessin annexé feront bien comprendre comment l'invention peut être réalisée. Sur ces figures, des références identiques désignent des éléments semblables.
La figure 1 est le schéma synoptique d'un dispositif de dialogue conforme à l'invention.
Les figures 2 à 16 illustrent schématiquement différentes actions susceptibles d'être réalisées conformément à l'invention, en agissant sur un moyen d'interaction selon l'invention.

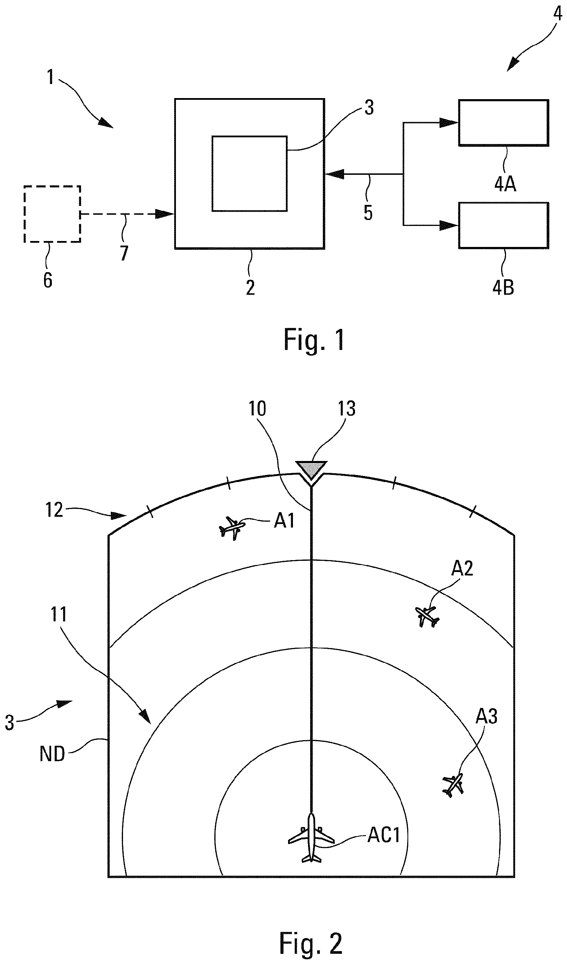

Le dispositif de dialogue 1 conforme à l'invention et représenté schématiquement sur la figure 1 est embarqué sur un aéronef, en particulier un avion de transport, non représenté, et est, de préférence, agencé dans le poste de pilotage dudit aéronef. Ce dispositif de dialogue 1 est destiné à permettre un dialogue entre au moins un opérateur de l'aéronef, notamment un pilote, et un système de guidage usuel dudit aéronef.

Pour ce faire, ledit dispositif de dialogue 1 qui est embarqué sur l'aéronef comporte un système d'affichage 2 qui comprend au moins un écran 3 susceptible de restituer des informations de guidage dudit système de guidage 4.

Ledit dispositif de dialogue 1 peut comporter un ou plusieurs écrans 3 et, de préférence, au moins l'un des écrans suivants :
- un écran de pilotage de type PFD (« Primary Flight Display » en anglais) ;
- un écran de navigation de type ND (« Navigation Display » en anglais) relatif au plan latéral ;
- un écran de navigation de type VD (« Vertical Display » en anglais) relatif au plan vertical.

Selon l'invention, l'écran 3 comprend au moins un objet graphique qui est réalisé sous forme d'un moyen d'interaction 8. Ce moyen d'interaction 8 est associé à au moins une consigne de guidage du système de guidage 4 et représente :
- d'une part, un élément de restitution qui indique la valeur de cette consigne de guidage dudit système de guidage 4, en liaison avec une échelle de valeurs ; et
- d'autre part, un élément de commande qui peut être saisi et déplacé le long d'une courbe par un opérateur, en particulier le pilote de l'aéronef, de manière à modifier la valeur de ladite consigne de guidage (dudit système de guidage 4).

Pour ce faire, le système d'affichage 2 comprenant l'écran 3 est relié par l'intermédiaire d'une liaison 5 à des moyens de guidage 4A et 4B dudit système de guidage 4, de manière à pouvoir réaliser une communication d'informations entre les deux ensembles. Ledit système de guidage 4 peut comporter, comme moyens de guidage :
- un directeur de vol 4A usuel, qui calcule des consignes de pilotage en fonction de consignes de guidage ; et/ou
- un système de pilotage automatique 4B usuel, qui permet de suivre des consignes de guidage de façon automatique.

Ainsi, grâce au dispositif de dialogue 1 conforme à l'invention, l'opérateur dispose sur l'écran 3 d'au moins un moyen d'interaction 8 qui est associé à une consigne de guidage dudit système de guidage 4 et qui, non seulement, permet la restitution de la valeur de cette consigne de guidage à laquelle il est associé, mais qui permet également de modifier cette valeur sur l'écran 3.

Le dispositif de dialogue 1 conforme à l'invention permet donc une interaction directe sur un écran 3 (qui était jusque-là dédié uniquement à la restitution des paramètres de vol et du guidage), au travers d'un moyen d'interaction 8 (à savoir un objet graphique permettant une interaction) associé à une consigne de guidage.

Selon l'invention, ledit écran 3 est un écran tactile, comme représenté sur les figures 2 à 12, et un objet graphique est commandé par l'opérateur par un contact direct sur l'écran tactile 3, de préférence (mais non exclusivement) par un contact digital de l'opérateur, dont un doigt 9 est partiellement représenté sur certaines de ces figures.

En outre, dans un exemple d'un mode de réalisation, le dispositif de dialogue 1 comporte, de plus, des moyens de commande 6, représentés en traits interrompus sur la figure 1 pour montrer qu'ils correspondent à une variante possible, qui sont reliés à l'écran 3 (par une liaison 7 usuelle de type filaire ou à ondes électromagnétiques) et qui peuvent être actionnés manuellement par un opérateur de manière à commander le déplacement d'un curseur usuel (non représenté) sur l'écran 3, destiné à agir sur le ou les moyens d'interaction 8.

Ces moyens de commande 6 peuvent notamment comporter :
- une boule de commande (« trackball » en anglais) ;
- une souris d'ordinateur ; et/ou
- un pavé tactile (du type multitouches ou non).

Le moyen d'interaction 8 peut donc être saisi et déplacé par un opérateur le long d'une courbe prédéfinie (sur une échelle par exemple, qui peut apparaître de façon dynamique et contextuelle lors de la modification de consigne) de manière à modifier la consigne de guidage associée. Ladite courbe peut être une échelle de valeurs qui est affichée par défaut, comme représenté sur les figures 2 à 8, ou une courbe indépendante sur laquelle peut apparaître de façon dynamique et contextuelle une échelle de valeurs.

A titre d'illustration, sur les figures 2 à 8, l'écran 3 est un écran de navigation de type ND (« Navigation Display » en anglais) relatif au plan latéral. Sur ces figures 2 à 8, on a représenté :
- un symbole AC1 représentant la position courante de l'aéronef équipé du dispositif 1 ;
- des symboles A1, A2, A3 représentant les positions courantes d'aéronefs environnants ;
- une échelle 11 de distance (par rapport à la position courante AC1 de l'aéronef) ;
- une échelle 12 de cap (une rose de cap) avec un symbole 13 indiquant sur l'échelle 12 la valeur du cap courant ; et
- un tracé 10 en trait continu qui illustre la trajectoire latérale suivie par l'aéronef.

Les figures 2 à 6 illustrent différentes situations successives lors de la modification d'une consigne de guidage du système de guidage 4, en l'occurrence d'une consigne de cap. Plus précisément :
- la figure 2 illustre la situation initiale avant une modification ;

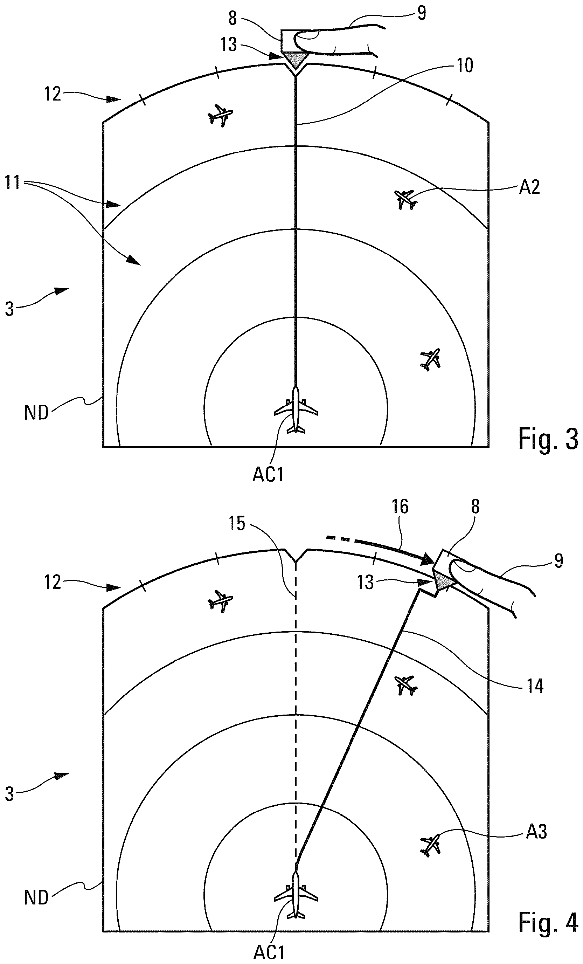

- sur la figure 3, un opérateur a amené un doigt 9 sur un objet graphique de l'écran ND, ce contact digital de l'écran ND faisant apparaître un moyen d'interaction 8, destiné à modifier la consigne de cap de l'aéronef ;
- l'opérateur déplace ensuite le moyen d'interaction 8 avec son doigt 9, comme illustré par une flèche 16 sur la figure 4 de manière à modifier la valeur de cap. Un tracé 15 en traits interrompus qui illustre la trajectoire latérale conforme au plan de vol apparaît, et un tracé 14 qui indique une trajectoire latérale prédite suit le moyen 8, ces tracés 14 et 15 illustrant des parties de trajectoire dans le plan latéral ;

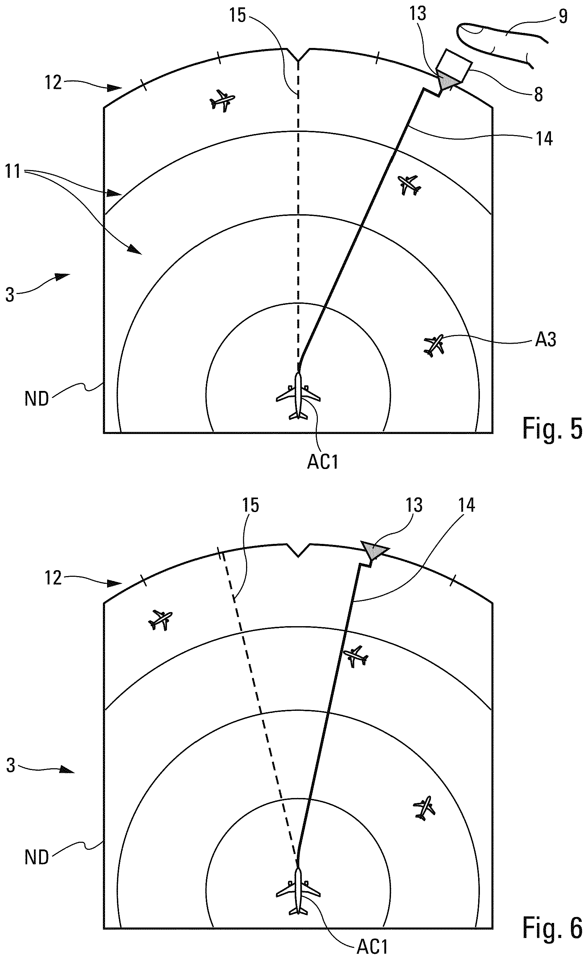

- sur la figure 5, l'opérateur a relâché son doigt 9 et la modification a été prise en compte par le système de guidage 4, le nouveau cap est illustré sur l'échelle de cap 12 par le symbole 13 ;
- l'aéronef va alors modifier progressivement son cap (comme illustré sur la figure 6) pour atteindre ce nouveau cap.

Le dispositif de dialogue 1 conforme à l'invention permet ainsi au pilote de sélectionner des consignes de guidage (ainsi que des modes de guidage, comme précisé ci-dessous) à l'endroit même (écran 3) où il peut vérifier et surveiller le comportement de l'aéronef. Ceci évite les allers-retours visuels et une dispersion des éléments de guidage, qui existent sur les dispositifs de dialogue usuels. Ces remarques s'appliquent également au second mode de réalisation utilisant des moyens de commande 6 puisque, dans ce cas, le pilote suit visuellement sur l'écran 3 les commandes réalisées à l'aide de ces moyens de commande 6 (susceptibles d'être déportés par rapport à l'écran 3).

La présente invention concerne également un système de guidage 4 d'un aéronef, à savoir un directeur de vol 4A ou un système de pilotage automatique 4B, qui comporte un dispositif de dialogue 1 tel que celui précité, pour permettre un dialogue entre ledit système de guidage 4 et un pilote dudit aéronef.

Par ailleurs, dans un mode de réalisation préféré, ledit dispositif de dialogue 1 comporte une pluralité de moyens d'interaction 8, dont chacun est destiné à une consigne de guidage donnée (vitesse/mach, cap/route, altitude, vitesse verticale/pente) dudit système de guidage 4. L'utilisation d'une pluralité de moyens d'interaction 8, à savoir un moyen d'interaction par consigne de guidage, sur les écrans 3 dédiés à la restitution des paramètres de vol et du guidage (PFD, ND, VD), permet de mettre en oeuvre directement sur ces écrans 3 toutes les fonctions d'un boîtier de commande physique usuel, par exemple de type FCU, et donc de se passer d'un tel boîtier de commande, ce qui représente un gain important notamment en termes de coût, de poids et d'encombrement.

Dans un mode de réalisation préféré, ledit moyen d'interaction 8 comprend une pluralité d'états qui permettent la mise en oeuvre d'actions différentes. Le passage d'un état à un autre du moyen d'interaction 8 est généré par un déplacement correspondant de ce dernier. Dans ce cas, ledit moyen d'interaction 8 comprend des états qui permettent la mise en oeuvre d'au moins certaines des actions différentes suivantes :
- modifier une consigne de guidage, dite sélectée, qui est appliquée par le système de guidage 4 ;
- modifier une consigne de guidage préréglée, qui sera appliquée directement par le système de guidage 4 après validation ;
- armer ou engager un mode de capture ou de maintien d'une consigne de guidage sélectée (mode sélecté) ; et
- engager un mode de capture ou de maintien d'une consigne de guidage calculée automatiquement de façon usuelle (mode managé).

Dans un mode de réalisation préféré, le moyen d'interaction 8 permet ainsi de commander l'engagement (activation) du mode de guidage associé sur la valeur définie (mode dit sélecté) ou sur une valeur calculée par le système selon certains critères (mode dit managé), et également l'armement d'un mode de guidage.

Dans un mode de réalisation particulier, ledit moyen d'interaction 8 n'est pas affiché en continu sur l'écran 3, et il apparaît sur sollicitation en plaçant un élément de pointage sur l'objet graphique correspondant (par un contact direct ou par le positionnement d'un curseur), comme illustré sur la figure 3.

En outre, de préférence, chaque moyen d'interaction 8 possède les états précités (non visible, en modification directement prise en compte pour le guidage, en préréglage, en requête d'armement ou d'engagement du mode managé) qui sont accessibles par un déplacement de curseur (ou par contact en mode tactile). De préférence, la gestion du moyen d'interaction 8 présente les caractéristiques suivantes :
- par défaut, l'état du moyen d'interaction 8 est invisible (seule la restitution de la valeur de consigne est affichée dans le cas où une consigne existe) ;
- le moyen d'interaction 8 apparaît sur requête, en plaçant le curseur (ou un doigt 9) sur l'objet graphique représentant la valeur de la consigne de guidage ou la valeur courante du paramètre ;
- dès lors, la modification de la consigne est possible en déplaçant le moyen d'interaction 8 le long d'une courbe prédéfinie. La consigne de guidage est alors prise en compte de façon immédiate ;
- si le pilote souhaite faire un préréglage de la consigne de guidage (à savoir choisir une valeur sans l'activer, et ne l'activer qu'ultérieurement, par exemple après validation de sa requête par le contrôle aérien), il peut accéder à l'état de préréglage en se plaçant sur le moyen d'interaction 8, en le saisissant et en le déplaçant de façon appropriée, de préférence vers l'arrière (en s'éloignant de l'échelle ou de la courbe de déplacement pour la modification) de façon à faire apparaître un état graphique différent associé au préréglage (qui est mis en évidence par une couleur approprié, par exemple en jaune). Ensuite, il peut modifier la valeur de préréglage en déplaçant le moyen d'interaction 8 le long de la courbe prédéfinie (comme pour la consigne de guidage) ;
- pour activer effectivement un préréglage, un déplacement approprié du moyen d'interaction 8, de préférence vers l'intérieur cette fois (vers l'échelle), provoque le recouvrement de l'objet graphique associé au préréglage, validant ainsi la valeur pour le guidage effectif de l'aéronef ; et
- pour engager ou armer le mode managé de l'axe considéré (mode pour lequel la consigne de guidage est calculée automatiquement par le système selon des critères prédéfinis), le moyen d'interaction 8 est poussé davantage vers l'intérieur de l'interface donnant la main au système et faisant apparaître de façon temporaire un objet graphique à recouvrir pour valider la commande. Dans un mode de réalisation particulier, le relâchement du moyen d'interaction 8 doit être effectif en bout de course du déplacement requis pour valider l'action. Dans ce cas, un relâchement du moyen d'interaction 8 avant la fin du déplacement requis est sans effet.

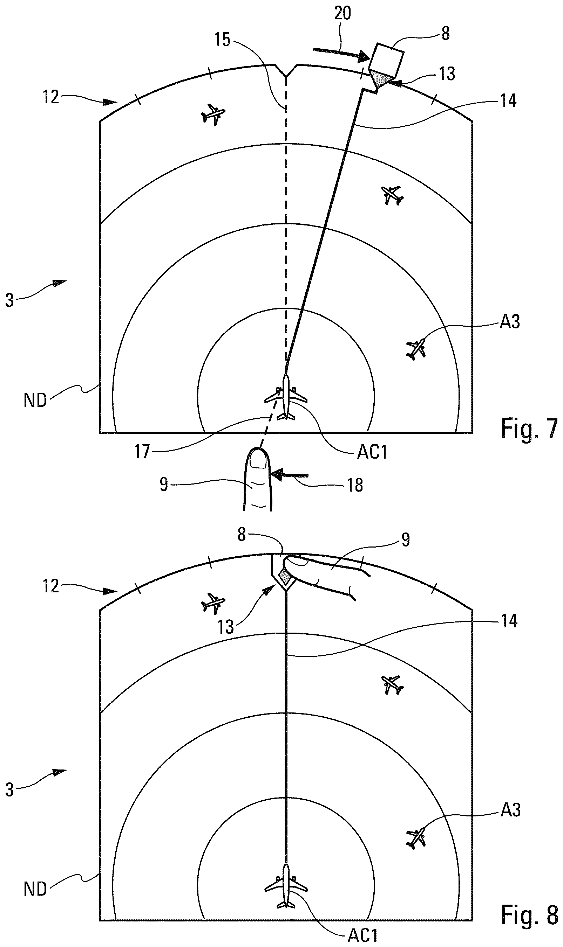

Dans le cadre de la présente invention, ledit moyen d'interaction 8 est de préférence déplacé par une action directe. Il est toutefois également envisageable de déplacer ledit moyen d'interaction par un effet dit « de bras de levier ». Dans ce dernier cas, un opérateur interagit avec l'objet graphique représentant la consigne de guidage (par exemple de cap/route), non pas par une interaction directe sur cet objet, mais avec un bras de levier se trouvant diamétralement opposé à cette représentation de consigne, le long de l'échelle, notamment en forme de rose des caps, comme illustré par une ligne 17 en tirets sur la figure 7 (qui représente la même situation que la figure 4) sur un point de laquelle agit un doigt 9 dont le déplacement est illustré par une flèche 18, ce qui provoque le déplacement du moyen d'interaction 8 dans la direction et le sens illustrés par une flèche 20.

Par ailleurs, dans un mode de réalisation particulier, ledit dispositif de dialogue 1 comporte au moins un moyen d'interaction, qui est susceptible de commander au moins deux références différentes (vitesse/mach, cap/route, vitesse verticale/pente) d'une consigne de guidage dudit système de guidage 4. Dans ce cas, il est susceptible de commander uniquement une référence à la fois, et la sélection d'une desdites références à commander dépend de la manière dont on fait apparaître le moyen d'interaction 8.

Dans ce dernier mode de réalisation, la façon de faire apparaître le moyen d'interaction 8 permet donc de sélectionner la référence de consigne. Par exemple, en convoquant le moyen d'interaction sur le dessus de l'échelle de cap 12 (figure 3), on fait apparaître l'état du moyen d'interaction 8 permettant de modifier la consigne de cap, alors qu'une convocation depuis l'intérieur de l'échelle de cap 12 (figure 8 qui illustre la même situation que la figure 3) fait apparaître l'état du moyen d'interaction 8 permettant de sélectionner et de modifier une consigne de route. On peut de cette manière basculer d'une référence en cap à une référence en route.

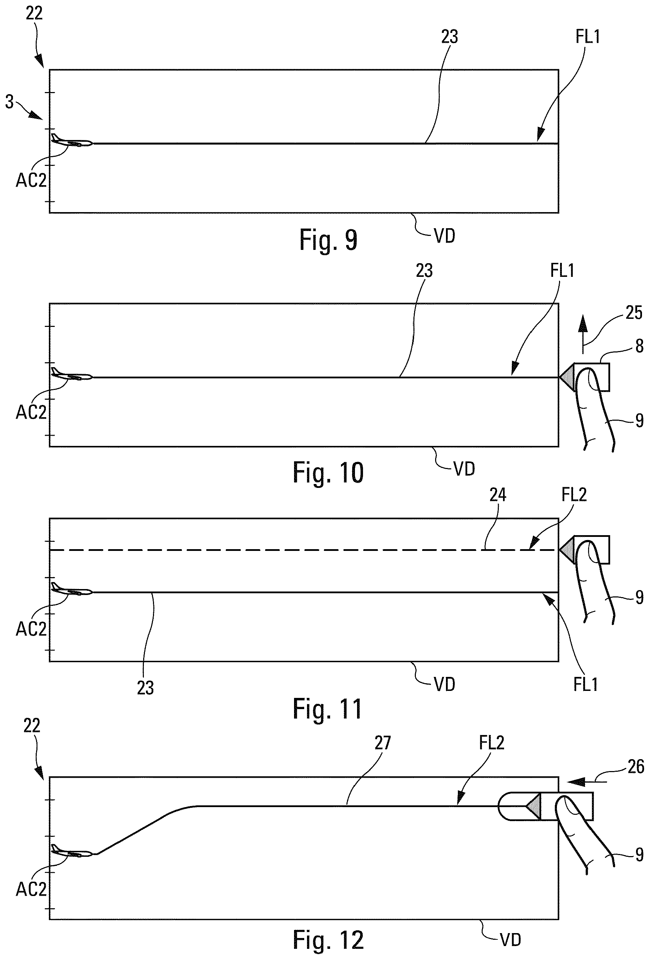

Par ailleurs, à titre d'illustration, sur les figures 9 à 16, l'écran 3 est un écran de navigation de type VD (« Vertical Display » en anglais) relatif au plan vertical. Sur ces figures 9 à 16, on a notamment représenté :
- un symbole AC2 représentant la position courante de l'aéronef équipé du dispositif 1 ; et
- une échelle d'altitude 22.

Les figures 9 et 12 illustrent des situations successives lors de la modification d'une consigne de guidage du système de guidage 4, en l'occurrence une consigne d'altitude (ou niveau de vol), l'aéronef étant initialement dans un mode de maintien d'altitude. Plus précisément :
- sur la figure 9, l'aéronef suit une trajectoire verticale (tracé 23) permettant de maintenir un niveau de vol FL1 ;
- sur la figure 10, un opérateur a amené un doigt 9 sur un objet graphique de manière à faire apparaître un moyen d'interaction 8 permettant de modifier une consigne d'altitude. L'opérateur déplace le moyen d'interaction 8, comme illustré par une flèche 25, de manière à réaliser le préréglage d'une nouvelle consigne d'altitude ;
- cette modification est réalisée dans un mode de préréglage de sorte que le niveau de vol à régler (qui est représenté par un tracé 24 en traits interrompus sur la figure 11) est mis en évidence par une couleur différente de celle du tracé 23. De préférence, le tracé 23 est en vert et le tracé 24 est en jaune ;
- la nouvelle consigne d'altitude (pour atteindre un niveau de vol FL2 suivant une trajectoire 27) est prise en compte par le système de guidage 4 après l'engagement d'un mode de montée (en maintien de vitesse CAS sans contrainte d'altitude), qui est commandé par un déplacement approprié (illustré par une flèche 26) du moyen d'interaction 8, comme montré sur la figure 12.

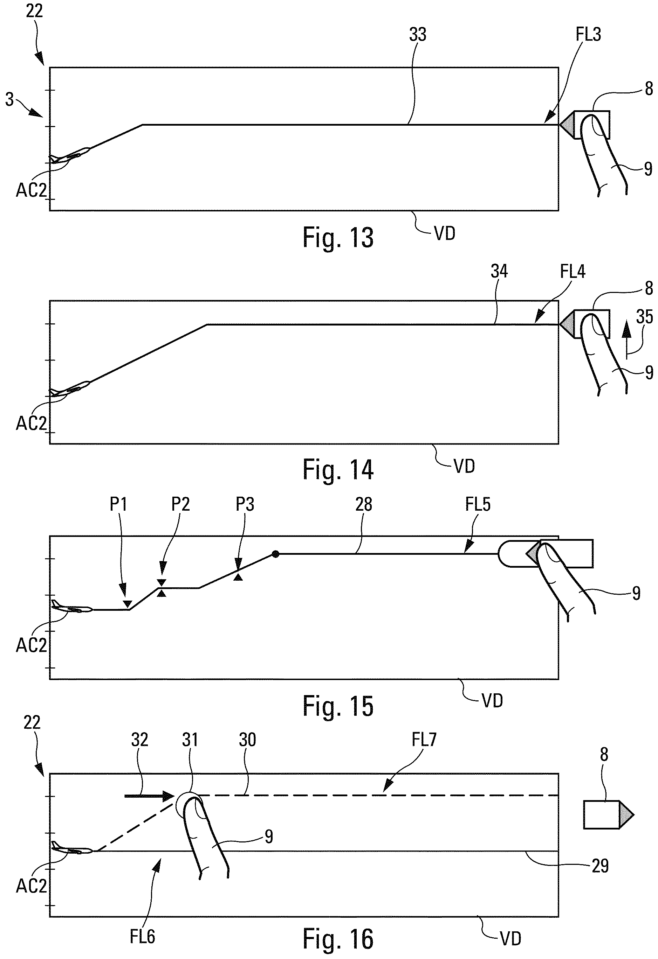

Les figures 13 et 14 illustrent également des situations successives lors de la modification d'une consigne de guidage du système de guidage 4, en l'occurrence une consigne d'altitude (ou niveau de vol), mais dans ce cas l'aéronef est initialement (non pas dans un mode de maintien d'altitude) mais dans un mode montée vers un niveau de vol FL3. Plus précisément :
- sur la figure 13, l'aéronef suit une trajectoire verticale (tracé 33) permettant de rejoindre un niveau de vol FL3. De plus, sur cette figure 13, un opérateur a amené un doigt 9 sur un objet graphique de manière à faire apparaître un moyen d'interaction 8 permettant de modifier une consigne d'altitude. Ce moyen d'interaction 8 apparaît directement au niveau dudit niveau de vol FL3 ; et
- sur la figure 13, l'opérateur déplace le moyen d'interaction 8, comme illustré par une flèche 35, de manière à réaliser une modification de la consigne de d'altitude qui est, dans ce cas, immédiatement prise en compte par le système de guidage 4 (pour atteindre un niveau de vol FL4 suivant une trajectoire 34).

Il est également possible de mettre en oeuvre un mode de montée vers une altitude de consigne en respectant une contrainte particulière, par exemple une contrainte d'altitude ou de profil géométrique. A titre d'illustration, sur l'exemple de la figure 15, pour rejoindre un niveau de vol FL5, la trajectoire verticale 28 doit respecter une pluralité de contraintes d'altitude, illustrées respectivement par des symboles P1, P2 et P3. En particulier, la trajectoire verticale 28 doit passer :
- sous l'altitude mise en évidence par le symbole P1 ;
- par le point mis en évidence par le symbole P2 ; et
- au-dessus de l'altitude mise en évidence par le symbole P3.

Par ailleurs, de préférence, ledit écran 3 engendre un retour visuel dynamique sur une trajectoire prédite associée à la consigne de guidage, ce qui permet de disposer directement sur le même écran 3 à la fois d'un moyen de modification de la consigne de guidage, de la restitution de la valeur actuelle de la consigne de guidage, et d'une indication de l'effet généré sur la trajectoire de l'aéronef par une modification de la consigne de guidage. Ceci est particulièrement avantageux opérationnellement, puisque le pilote peut interpréter de façon immédiate l'impact de ses modifications de consigne de guidage sur la trajectoire, et ceci sans avoir à réaliser un aller-retour visuel entre un panneau de commande et un écran de restitution.

De plus, dans ce dernier mode de réalisation, ledit écran 3 peut également afficher, automatiquement, au moins un point caractéristique 31 de ladite trajectoire 30 prédite (figure 16). A titre d'illustration, il peut, par exemple, visualiser les points suivants caractéristiques :
- le point d'intersection de sa trajectoire de cap/route prédite avec le plan de vol ;
- le point d'intersection de sa trajectoire de cap/route prédite avec l'axe de la piste utilisée pour un atterrissage ;
- la distance horizontale (en Nm) par rapport à l'aéronef, du point de capture de l'altitude de consigne.

Dans un mode de réalisation particulier, on étend les interactions aux points caractéristiques de l'affichage de la prédiction de trajectoire du mode de réalisation préféré précédent. Ainsi, ledit moyen d'interaction est susceptible d'agir sur le ou les points caractéristiques affichés de ladite trajectoire prédite pour les modifier.

A titre d'illustration, on peut ainsi notamment réaliser les opérations suivantes :
- sur le préréglage de cap, on peut retarder le début de virage en repoussant, le long de la prédiction de trajectoire par exemple, la représentation (sur l'écran ND) du point de début de prise en compte de la consigne de préréglage de cap ;
- de même sur le préréglage de pente/vitesse, on peut retarder le point de début de descente/montée par une interaction sur la représentation graphique de ce point (sur l'écran VD) ;
- on peut modifier la valeur de consigne de vitesse verticale/pente par une interaction sur la représentation graphique de fin de montée/descente.

A titre d'illustration, sur la figure 16, l'aéronef suit une trajectoire verticale (tracé 29) relative à un niveau de vol FL6. De plus, un opérateur a fait apparaître une trajectoire verticale (tracé 30) relative à un mode de préréglage. Cette trajectoire est mise en évidence par une représentation différente (par exemple une couleur différente) de celle du tracé 29. De préférence, le tracé 29 est en vert et le tracé 30 est en jaune. L'opérateur déplace alors un point caractéristique 31 de la trajectoire 30, comme illustré par une flèche 32 de manière à agir sur le point de capture d'altitude de consigne modifiant ainsi la vitesse verticale de montée. Il réalise ainsi une interaction sur ce point caractéristique 31 de la trajectoire prédite 30. La nouvelle consigne d'altitude (pour atteindre le niveau de vol FL7 suivant la trajectoire 30) est prise en compte par le système de guidage 4 après un engagement d'un mode de montée, qui est commandé par un actionnement approprié du moyen d'interaction 8.

## Revendications

1. Dispositif de dialogue entre un opérateur d'un aéronef et un système de guidage dudit aéronef, ledit dispositif de dialogue (1) étant embarqué sur l'aéronef et comportant au moins un écran (3) susceptible de restituer des informations de guidage,
**caractérisé en ce que** ledit écran (3) est un écran tactile (3), l'écran tactile (3) comprenant au moins un objet graphique qui est réalisé sous forme d'un moyen d'interaction (8) commandé par un contact direct dudit écran tactile (3), le moyen d'interaction (8) représentant :
- d'une part, un élément de restitution qui indique la valeur d'au moins une consigne de guidage dudit système de guidage (4) ; et
- d'autre part, un élément de commande qui peut être saisi et déplacé le long d'une courbe par un opérateur de manière à modifier la valeur de ladite consigne de guidage dudit système de guidage (4).

2. Dispositif de dialogue selon la revendication 1,
**caractérisé en ce que** ledit moyen d'interaction (8) comprend une pluralité d'états qui permettent la mise en oeuvre d'actions différentes.

3. Dispositif de dialogue selon la revendication 2,
**caractérisé en ce que** ledit moyen d'interaction (8) comprend des états qui permettent la mise en oeuvre d'au moins certaines des actions différentes suivantes :
- modifier une consigne de guidage, dite sélectée, qui est appliquée par le système de guidage (4) ;
- modifier une consigne de guidage préréglée, qui sera appliquée par le système de guidage (4) après validation ;
- engager un mode de capture ou de maintien d'une consigne de guidage sélectée ; et
- engager un mode de capture ou de maintien d'une consigne de guidage calculée.

4. Dispositif de dialogue selon l'une des revendications 2 et 3, **caractérisé en ce que** le passage d'un état à un autre du moyen d'interaction (8) est généré par un déplacement correspondant de ce dernier.

5. Dispositif de dialogue selon l'une quelconque des revendications précédentes,
**caractérisé en ce qu'**il comporte une pluralité de moyens d'interaction (8), dont chacun est destiné à une consigne de guidage donnée dudit système de guidage (4).

6. Dispositif de dialogue selon l'une quelconque des revendications précédentes,
**caractérisé en ce qu'**il comporte au moins un moyen d'interaction (8) qui est susceptible de commander au moins deux références différentes d'une consigne de guidage dudit système de guidage, **en ce que** ledit moyen d'interaction (8) est susceptible de commander uniquement une référence à la fois, et **en ce que** la sélection d'une desdites références à commander dépend du déplacement dudit moyen d'interaction (8).

7. Dispositif de dialogue selon l'une quelconque des revendications précédentes,
**caractérisé en ce que** ledit moyen d'interaction (8) n'est pas affiché en permanence sur l'écran (3), et il apparaît sur l'écran (3) en plaçant un pointeur sur l'objet graphique correspondant.

8. Dispositif de dialogue selon l'une quelconque des revendications précédentes,
**caractérisé en ce que** ledit moyen d'interaction (8) est déplacé par un effet de bras de levier.

9. Dispositif de dialogue selon l'une quelconque des revendications précédentes,
**caractérisé en ce que** ledit écran (3) engendre un retour visuel dynamique sur une trajectoire prédite (30) associée à la consigne de guidage.

10. Dispositif de dialogue selon la revendication 9,
**caractérisé en ce que** ledit écran (3) affiche automatiquement au moins un point caractéristique (31) de ladite trajectoire prédite (30).

11. Dispositif de dialogue selon la revendication 10,
**caractérisé en ce qu'**un moyen d'interaction est susceptible d'agir sur ledit point caractéristique (31) de ladite trajectoire prédite (30).

12. Dispositif de dialogue selon l'une quelconque des revendications précédentes,
**caractérisé en ce qu'**il comporte, de plus, des moyens de commande (6) reliés à l'écran (3) et permettant à un opérateur de commander le déplacement d'un curseur sur l'écran (3), destiné à agir sur le moyen d'interaction.

13. Système de guidage d'un aéronef, **caractérisé en ce qu'**il comporte un dispositif de dialogue (1) tel que celui spécifié sous l'une quelconque des revendications 1 à 12, pour permettre un dialogue entre ledit système de guidage (4) et un opérateur dudit aéronef.

## Patentansprüche

1. Dialogvorrichtung zwischen einem Luftfahrzeugbetreiber und einem Führungssystem des Luftfahrzeugs, wobei die Dialogvorrichtung (1) sich an Bord des Luftfahrzeugs befindet und mindestens einen Bildschirm (3) beinhaltet, der geeignet ist, um Führungsinformationen wiederzugeben,
**dadurch gekennzeichnet, dass** der Bildschirm (3) ein Berührungsbildschirm (3) ist, wobei der Berührungsbildschirm (3) mindestens ein grafisches Objekt umfasst, das in Form eines Interaktionsmittels (8) realisiert ist, das durch eine unmittelbare Berührung des Berührungsbildschirms (3) gesteuert wird, wobei das Interaktionsmittel (8) darstellt:
- einerseits ein Wiedergabeelement, das den Wert mindestens einer Führungsanweisung des Führungssystems (4) angibt; und
- andererseits ein Steuerelement, das durch einen Betreiber erfasst und entlang einer Kurve bewegt werden kann, um den Wert der Führungsanweisung des Führungssystems (4) zu ändern.

2. Dialogvorrichtung nach Anspruch 1,
**dadurch gekennzeichnet, dass** das Interaktionsmittel (8) eine Vielzahl von Zuständen umfasst, die die Umsetzung unterschiedlicher Handlungen ermöglicht.

3. Dialogvorrichtung nach Anspruch 2,
**dadurch gekennzeichnet, dass** das Interaktionsmittel (8) Zustände umfasst, die die Umsetzung mindestens gewisser der folgenden unterschiedlichen Handlungen ermöglicht:
- Ändern einer als ausgewählte bezeichneten Führungsanweisung, die durch das Führungssystem (4) angewandt wird;
- Ändern einer voreingestellten Führungsanweisung, die durch das Führungssystem (4) nach Validierung angewandt wird;
- Einleiten eines Erfassungs- oder Beibehaltungsmodus einer ausgewählten Führungsanweisung; und
- Einleiten eines Erfassungs- oder Beibehaltungsmodus einer berechneten Führungsanweisung.

4. Dialogvorrichtung nach einem der Ansprüche 2 und 3,
**dadurch gekennzeichnet, dass** der Übergang von einem Zustand zu einem anderen des Interaktionsmittels (8) durch eine entsprechende Bewegung dieses Letzteren hervorgerufen wird.

5. Dialogvorrichtung nach einem der vorstehenden Ansprüche,
**dadurch gekennzeichnet, dass** sie eine Vielzahl von Interaktionsmitteln (8) beinhaltet, die jeweils für eine gegebene Führungsanweisung des Führungssystems (4) vorgesehen sind.

6. Dialogvorrichtung nach einem der vorstehenden Ansprüche,
**dadurch gekennzeichnet, dass** sie mindestens ein Interaktionsmittel (8) beinhaltet, das geeignet ist, um mindestens zwei unterschiedliche Referenzen einer Führungsanweisung des Führungssystems zu steuern, und dadurch, dass das Interaktionsmittel (8) geeignet ist, um nur eine Referenz gleichzeitig zu steuern, und dadurch, dass die Auswahl einer der zu steuernden Referenzen von der Bewegung des Interaktionsmittels (8) abhängt.

7. Dialogvorrichtung nach einem der vorstehenden Ansprüche,
**dadurch gekennzeichnet, dass** das Interaktionsmittel (8) nicht laufend auf dem Bildschirm (3) angezeigt wird, und es erscheint auf dem Bildschirm (3), indem ein Pointer auf das entsprechende grafische Objekt gesetzt wird.

8. Dialogvorrichtung nach einem der vorstehenden Ansprüche,
**dadurch gekennzeichnet, dass** das Interaktionsmittel (8) durch eine Hebelarmwirkung bewegt wird.

9. Dialogvorrichtung nach einem der vorstehenden Ansprüche,
**dadurch gekennzeichnet, dass** der Bildschirm (3) eine dynamische visuelle Rückmeldung auf einer vorhergesagten Bahn (30), die mit der Führungsanweisung assoziiert ist, erzeugt.

10. Dialogvorrichtung nach Anspruch 9,
**dadurch gekennzeichnet, dass** der Bildschirm (3) automatisch mindestens einen charakteristischen Punkt (31) der vorhergesagten Bahn (30) anzeigt.

11. Dialogvorrichtung nach Anspruch 10,
**dadurch gekennzeichnet, dass** ein Interaktionsmittel geeignet ist, auf den charakteristischen Punkt (31) der vorhergesagten Bahn (30) zu wirken.

12. Dialogvorrichtung nach einem der vorstehenden Ansprüche,
**dadurch gekennzeichnet, dass** sie weiter Steuermittel (6) beinhaltet, die mit dem Bildschirm (3) verbunden sind und es einem Betreiber ermöglichen, die Bewegung eines Cursors auf dem Bildschirm (3) zu steuern, der vorgesehen ist, um auf das Interaktionsmittel zu wirken.

13. Führungssystem eines Luftfahrzeugs,
**dadurch gekennzeichnet, dass** es eine Dialogvorrichtung (1) nach einem der Ansprüche 1 bis 12 beinhaltet, um einen Dialog zwischen dem Führungssystem (4) und einem Luftfahrzeugbetreiber zu ermöglichen.

## Claims

1. Dialog device between an operator of an aircraft and a guidance system of said aircraft, said dialog device (1) being installed on the aircraft and comprising at least one screen (3) capable of restoring guidance information,
**characterized in that** said screen (3) is a touch screen (3), the touch screen (3) comprising at least one graphic object which is produced in the form of an interaction means (8) controlled by a direct contact with said touch screen (3), the interaction means (8) representing:
- on the one hand, a playback element which indicates the value of at least one guidance setpoint of said guidance system (4); and
- on the other hand, a control element which can be grasped and moved along a curve by an operator so as to modify the value of said guidance setpoint of said guidance system (4).

2. Dialog device as claimed in claim 1,
**characterized in that** said interaction means (8) comprises a plurality of states which allow different actions to be implemented.

3. Dialog device as claimed in claim 2,
**characterized in that** said interaction means (8) comprises states which allow at least some of the following different actions to be implemented:
- modifying a guidance setpoint, called selected, which is applied by the guidance system (4);
- modifying a preset guidance setpoint, which will be applied by the guidance system (4) after validation;
- engaging a capture or maintain mode for a selected guidance setpoint; and
- engaging a capture or maintain mode for a computed guidance setpoint.

4. Dialog device as claimed in one of claims 2 and 3,
**characterized in that** the transition from one state to another of the interaction means (8) is generated by a corresponding movement thereof.

5. Dialog device as claimed in any one of the preceding claims,
**characterized in that** it comprises a plurality of interaction means (8), each of which is intended for a given guidance setpoint of said guidance system (4).

6. Dialog device as claimed in any one of the preceding claims,
**characterized in that** it comprises at least one interaction means (8) which is capable of controlling at least two different references of a guidance setpoint of said guidance system, **in that** said interaction means (8) is capable of controlling only one reference at a time, and **in that** the selection of one of said references to be controlled depends on the movement of said interaction means (8).

7. Dialog device as claimed in any one of the preceding claims,
**characterized in that** said interaction means (8) is not displayed permanently on the screen (3), and it appears on the screen (3) by placing a pointer on the corresponding graphic object.

8. Dialog device as claimed in any one of the preceding claims,
**characterized in that** said interaction means (8) is moved by a lever arm effect.

9. Dialog device as claimed in any one of the preceding claims,
**characterized in that** said screen (3) generates a dynamic visual feedback on a predicted trajectory (30) associated with the guidance setpoint.

10. Dialog device as claimed in claim 9,
**characterized in that** said screen (3) automatically displays at least one characteristic point (31) of said predicted trajectory (30).

11. Dialog device as claimed in claim 10,
**characterized in that** an interaction means is capable of acting on said characteristic point (31) of said predicted trajectory (30).

12. Dialog device as claimed in any one of the preceding claims,
**characterized in that** it comprises, in addition, control means (6) linked to the screen (3) and enabling an operator to control the movement of a cursor on the screen (3), intended to act on the interaction means.

13. Guidance system of an aircraft,
**characterized in that** it comprises a dialog device (1) such as that specified in any one of the preceding claims 1 to 12, to enable a dialog between said guidance system (4) and an operator of said aircraft.
